# EUROPEAN PATENT APPLICATION

(11) **EP 2 757 288 A1**
(43) Date of publication of application: **23.07.2014**
(21) Application number: 11872469.9
(22) Date of filing: 15.09.2011
(51) Int. Cl.: F16H 57/04

(54) **RAILWAY CAR GEARING**

(71) Applicant: Mitsubishi Electric Corporation, Tokyo 100-8310 (JP)
(72) Inventor: TANAKA, Ikuya, Tokyo 100-8310 (JP)
(74) Representative: Zech, Stefan Markus
(86) International application number: PCT/JP2011/071149
(87) International publication number: WO 2013/038546

(57) **Abstract**

A railway vehicle gear unit 100 that is constituted by accommodating, in a gearbox 5, a large gear 1 that is fixed to an axle 2 provided on a truck frame and that engages with a small gear 3 to transmit a torque, and the small gear 3, wherein on the inner surface of the gearbox 5 in the circumferential direction of the large gear 1, a water removing device 12 that removes water included in lubricant oil 11 within the gearbox 5 is installed, and the water removing device 12 is arranged in an empty space a1 or a2 formed above an extended line of a line connecting the axle 2 and a small-gear shaft 4 or is arranged in an empty space b1 or b2 formed below the extended line of the line connecting the axle 2 and the small-gear shaft 4.

## Description

### Field

The present invention relates to a railway vehicle gear unit (hereinafter, referred to as "gear unit").

### Background

A conventional gear unit is configured by including a large gear that is fixed to an axle, that is formed with a diameter larger than the diameter of a small gear fixed to a small-gear shaft, and that engages with the small gear, and a gearbox that accommodates therein the small gear and the large gear. The gear unit is installed on a truck frame, and transmits a rotational torque from a traction motor to the axle to rotatably drive wheels mounted on the axle. At the bottom of the gearbox, a necessary amount of lubricant oil is stored. This lubricant oil is carried up by rotations of the large gear by using a lubrication method referred to as "oil splash lubrication method". A part of this lubricant oil, carried up by rotations of the large gear, is supplied to an engaging portion between the large gear and the small gear, bearings provided on both sides of the large gear, bearings provided on both sides of the small gear, and other parts.

In a conventional technique described in Patent Literature 1 mentioned below, a labyrinth structure is provided, for example, at a boundary portion between a small-gear shaft and a gearbox in order to prevent lubricant oil in a gear unit from leaking to the outside and to prevent outside dust and the like from entering the gear unit. This labyrinth structure utilizes a centrifugal force generated by rotations of a rotary shaft and a pressure difference between the inside and outside of the gear unit to prevent leakage of the lubricant oil.

### Citation List

### Patent Literature

Patent Literature 1: Japanese Patent Application Laid-open No. H09-152020

### Summary

### Technical Problem

However, the gear unit according to the conventional technique represented by Patent Literature 1 mentioned above has the following problems. Generally, a gear unit is mounted under the floor of a vehicle. Therefore, depending on the ambient environment including wind, rain, snow, and the like, wind, rain, snowmelt, and the like sometimes enter the interior of the gear unit through a labyrinth structure, and are mixed into lubricant oil. Furthermore, water, generated by internal condensation due to a temperature difference between the inside and outside of the gear unit, is sometimes mixed into the lubricant oil. Because the labyrinth structure is provided in the gear unit as described above, the water having been mixed into the lubricant oil remains inside without being discharged to the outside. The water and the lubricant oil are then agitated by rotations of the large gear, thereby causing the lubrication performance of the lubricant oil to be gradually reduced. Therefore, there is a possibility of adversely affecting bearing rotations and the like.

An object of the present invention is to provide a railway vehicle gear unit that can suppress degradation of the lubrication performance of lubricant oil.

### Solution to Problem

In order to solve the above problems and achieve the object, the present invention is a railway vehicle gear unit that is constituted by accommodating, in a gearbox, a small gear that is mounted on a rotary shaft of a traction motor provided on a truck frame of a railway vehicle, and a large gear that is mounted on an axle provided on the truck frame and that engages with the small gear to transmit a torque, wherein on an inner surface of the gearbox in a circumferential direction of the large gear, a water removing device that removes water included in lubricant oil carried up within the gearbox is installed.

### Advantageous Effects of Invention

According to the present invention, a water removing device that has an absorbent accommodated therein is provided in a space within a gear unit; therefore, degradation of the lubrication performance of lubricant oil can be suppressed.

### Brief Description of Drawings

FIG. 1 is a schematic diagram of a vehicle drive system in which gear units according to an embodiment of the present invention are installed.
FIG. 2 is a cross-sectional view of the gear unit taken along line A-A shown in FIG. 1.
FIG. 3 is a cross-sectional view taken along line B-B shown in FIG. 2.
FIG. 4 is a diagram showing the structure of a water removing device shown in FIG. 2.
FIG. 5 is another cross-sectional view of the gear unit taken along the line A-A shown in FIG. 1.

### Description of Embodiments

Exemplary embodiments of a railway vehicle gear unit according to the present invention will be explained below in detail with reference to the drawings. The present invention is not limited to the embodiments.

### Embodiment.

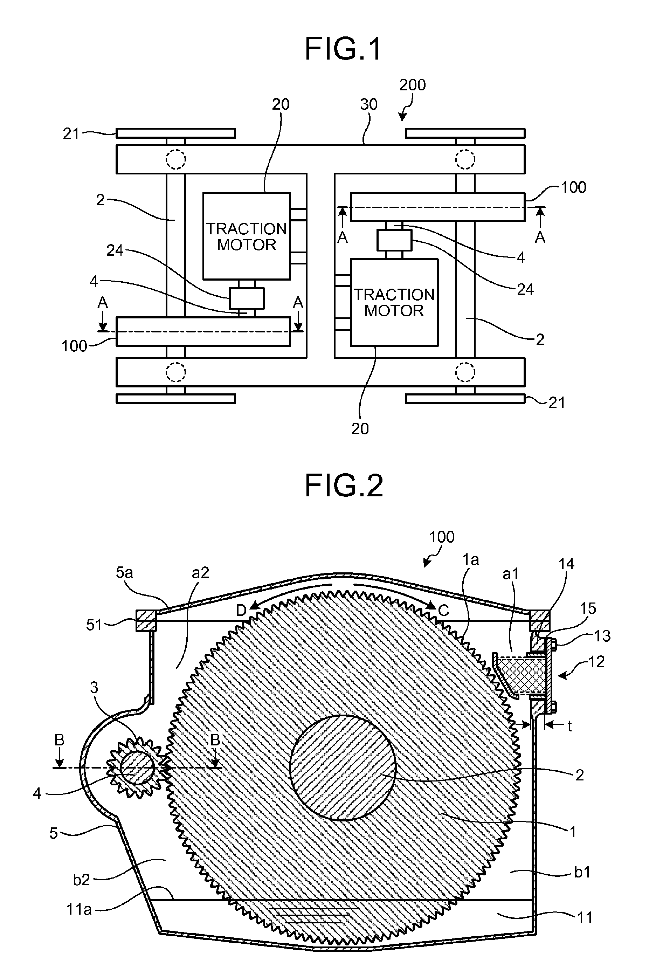

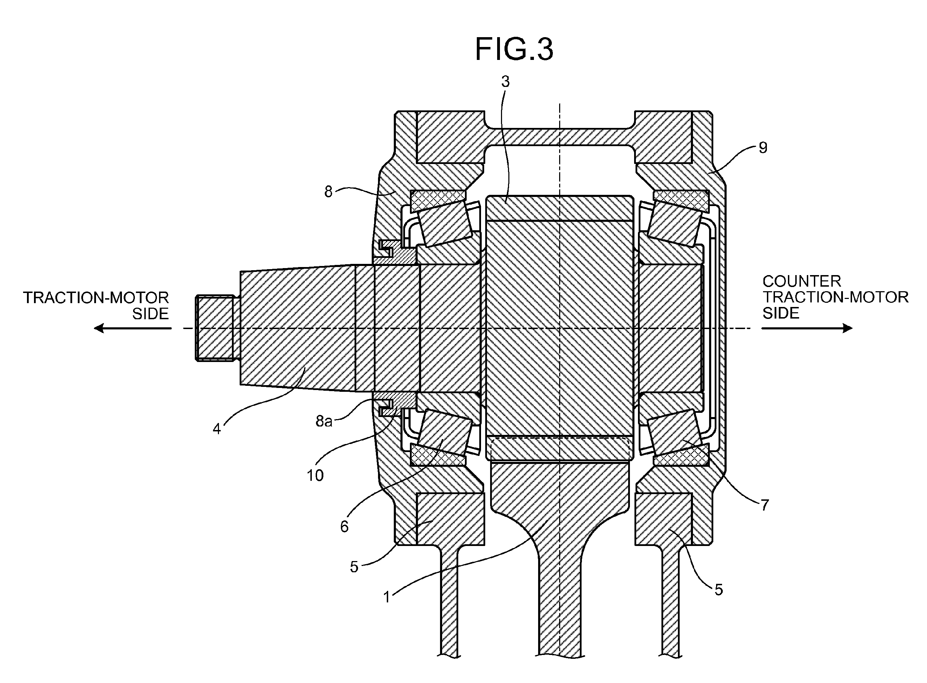

FIG. 1 is a schematic diagram of a vehicle drive system in which gear units 100 according to a first embodiment of the present invention are installed. FIG. 2 is a cross-sectional view of the gear unit 100 taken along line A-A shown in FIG. 1. FIG. 3 is a cross-sectional view taken along line B-B shown in FIG. 2.

In FIG. 1, a vehicle drive system 200 is configured by including traction motors 20 that are installed in a truck frame 30, axles 2 that are rotatably installed in the truck frame 30 and that have wheels 21 fitted to both ends of the axles 2, and the gear units 100 that are coupled with the traction motors 20 and with the axles 2 and that reduce the rotating speed of the traction motors 20 to transmit a driving force to the axles 2. The rotary shaft of the traction motor 20 and a small-gear shaft 4 are flexibly coupled with each other by a flexible shaft coupling 24.

In FIG. 2, the gear unit 100 is configured by including a small gear 3 that is fixed to the small-gear shaft 4, a large gear 1 that is provided to penetrate the axle 2 provided parallel to the small-gear shaft 4, that is formed with a diameter larger than the diameter of the small gear 3, and that engages with the small gear 3, a gearbox 5 that accommodates therein the small gear 3 and the large gear 1 and that stores therein a necessary amount of lubricant oil 11, and a lid 5a that is provided on the top of the gearbox 5. A part of the large gear 1 is immersed in the lubricant oil 11.

In FIG. 3, a small-gear bearing 6 is provided on the traction-motor side of the small gear 3, and a small-gear bearing 7 is provided on the counter traction-motor side of the small gear 3. The small-gear bearing 6 is fitted in a small-gear bearing cover 8 that is attached to the traction-motor side of the gearbox 5 and rotatably supports the small-gear shaft 4. The small-gear bearing 7 is fitted in a small-gear bearing cover 9 that is attached to the counter traction-motor side of the gearbox 5 and rotatably supports the small-gear shaft 4.

The small-gear bearing cover 8 is detachably fixed by a bolt (not shown) or the like screwed into the traction-motor-side surface of the gearbox 5, taking into consideration of the maintainability of the small-gear bearing 6. An oil slinger 10 is provided between an inner peripheral portion 8a of the small-gear bearing cover 8 and an outer peripheral surface of the small-gear shaft 4. The oil slinger 10 and the small-gear bearing cover 8 constitute a labyrinth structure that utilizes a centrifugal force generated by rotations of the small-gear shaft 4 and a pressure difference between the inside and outside of the gear unit 100 to prevent the lubricant oil 11 within the gearbox 5 from leaking to the outside and to prevent outside dust from entering the gear unit 100. Although not shown in FIG. 3, a small-gear bearing and the labyrinth structure are provided also on the traction-motor side of the large gear 1 and on the counter traction-motor side of the large gear 1 in a similar manner.

The lubricant oil 11 stored at the bottom of the gear unit 100 is carried up by rotations of the large gear 1 by using a lubrication method referred to as "oil splash lubrication method", and is supplied to an engaging portion between the large gear 1 and the small gear 3, the small-gear bearings 6 and 7, and other parts. However, the gear unit 100 is mounted under the floor of a railway vehicle (not shown), and therefore, depending on the ambient environment, wind, rain, snowmelt, and the like sometimes enter the interior of the gear unit 100 through the labyrinth structure. The water having entered the interior of the gear unit 100 is mixed into the lubricant oil 11. Furthermore, water generated by internal condensation due to a temperature difference between the inside and outside of the gear unit 100 is sometimes mixed into the lubricant oil 11. Because the labyrinth structure is provided in the gear unit 100 as described above, the water having been mixed into the lubricant oil 11 remains inside without being discharged to the outside. The water and the lubricant oil 11 are then agitated by rotations of the large gear 1, thereby causing the lubrication performance of the lubricant oil 11 to be gradually reduced. Therefore, there is a possibility of adversely affecting a rotational operation of the gear unit 100. In order to solve the problems as described above, the gear unit 100 according to the present embodiment includes a water removing device 12 that is detachably arranged in an empty space within the gearbox 5 as shown in FIG. 2.

The configuration of the water removing device 12 is specifically explained below.

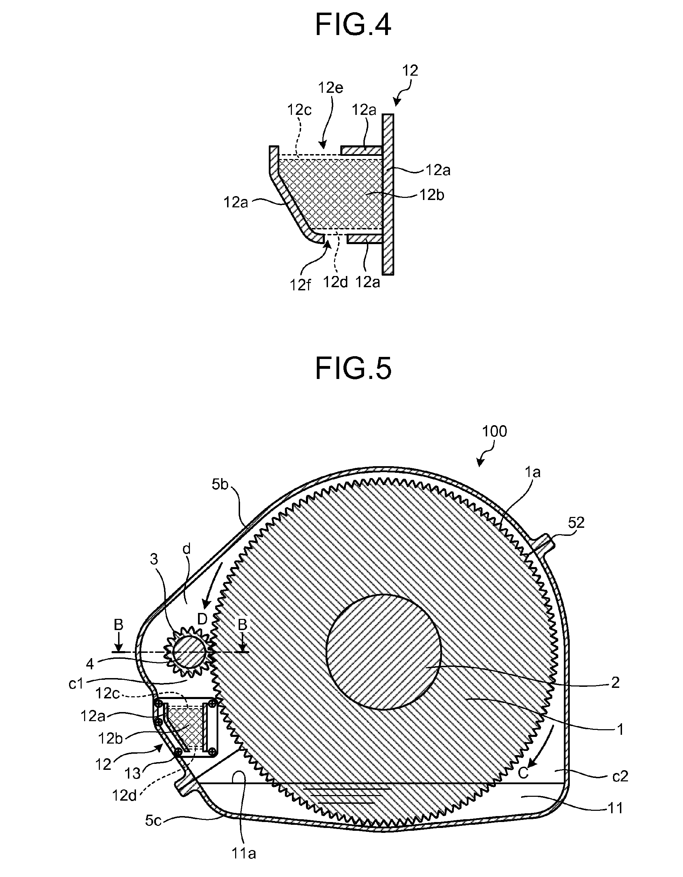

FIG. 4 depicts the structure of the water removing device shown in FIG. 2. The water removing device 12 is configured by including an absorbent 12b, filters 12c and 12d, and a cartridge 12a that accommodates therein the absorbent 12b and the filters 12c and 12d and that is arranged on the gearbox 5 by a fastening member (for example, a bolt) 13 inserted into the gearbox 5.

The surface of the cartridge 12a that faces an engagement portion 1a that is circumferentially provided on the large gear 1 is formed into a shape so as not to come into contact with the engagement portion 1a. The cartridge 12a includes an introduction portion 12e that introduces the lubricant oil 11, carried up by the large gear 1, to the absorbent 12b, and a discharge portion 12f that discharges the lubricant oil 11 from which water has been removed by the absorbent 12b.

The filter 12c is provided on the upper side of the water removing device 12, for example, and removes foreign matter included in the lubricant oil 11. The filter 12d is provided on the lower side of the water removing device 12, for example, and prevents particles and the like of the absorbent 12b from flowing out. The installation location of the filter 12c is not limited to the upper side of the water removing device 12 and may be at any location where the filter 12c is capable of taking in the lubricant oil 11 carried up by the large gear 1, such as on the lateral side of the water removing device 12.

The absorbent 12b removes water having been mixed into the lubricant oil 11. The lubricant oil 11 from which water has been removed is returned to the surface of the large gear 1 or to the bottom of the gearbox 5 through the filter 12d. As the absorbent 12b, it is preferable to use a material having a function of removing water in the lubricant oil 11 without affecting the lubricant oil 11, and a molecular sieve or the like is used.

Next, the installation location of the water removing device 12 is explained.

Within the gearbox 5, a space is formed as shown in FIG. 2, taking into consideration of the assembly, maintainability, and the like of the large gear 1. Specifically, in the case of the gear unit 100 shown in FIG. 2, when the large gear 1 is assembled, the large gear 1 is inserted from the top of the gearbox 5 to the interior of the gearbox 5. Therefore, an opening with a diameter larger than the diameter of the large gear 1 is formed in the top of the gearbox 5 (in a contact surface 51 between the gearbox 5 and the lid 5a). The axle 2 is then provided to penetrate the large gear 1 having been inserted into the gearbox 5 at a predetermined position within the gearbox 5. Therefore, empty spaces a1, a2, b1, and b2 as shown in FIG. 2 are formed at locations where the engagement portion 1a faces the inner peripheral surface of the gearbox 5 (on the inner surface of the gearbox 5 in the circumferential direction of the large gear 1).

The empty spaces a1 and a2 are formed above the extended line of the line connecting the axle 2 and the small-gear shaft 4, for example, and are the spaces required for arranging the large gear 1 within the gearbox 5. The empty spaces b1 and b2 are formed below the extended line of the line connecting the axle 2 and the small-gear shaft 4, for example, and are a part of the space formed for storing the lubricant oil 11. The water removing device 12 shown in FIG. 2 is arranged in the empty space a1 as an example. As described above, the water removing device 12 is installed in the empty space a1, a2, b1, or b2 within the gearbox 5, and therefore it becomes unnecessary to provide an additional space for providing the water removing device 12 between the engagement portion 1a and the inner peripheral surface of a gearbox 5b. Accordingly, the space formed between the engagement portion 1a and the inner peripheral surface of the gearbox 5b is minimized as required, and it is possible to remove water included in the lubricant oil 11, while downsizing the gearbox 5.

Next, a method of fixing the water removing device 12 is explained.

In the gearbox 5 shown in FIG. 2, a flange 14 (flange: a member with a shape projecting outward from the gearbox 5) is formed above the extended line of the line connecting the axle 2 and the small-gear shaft 4 and on the surface which faces the engagement portion 1a. The flange 14 includes an opening, through which the cartridge 12a of the water removing device 12 is insertable in the direction from the outside to the inside of the gearbox 5. The flange 14 is formed with the opening and is also formed with holes (not shown) through which a plurality of fastening members 13 (for example, bolts) to be inserted toward the gearbox 5 from the outside of the gearbox 5 are insertable. Therefore, after the cartridge 12a is inserted through the opening formed in the flange 14, the fastening members 13 are screwed into the flange 14 to fix the cartridge 12a to the gearbox 5. By providing the flange 14 on the gearbox 5 as described above, it is possible to replace the water removing device 12 easily. The flange 14 may be formed below the extended line of the line connecting the axle 2 and the small-gear shaft 4.

A gasket 15, which is a sealing member, is provided between the flange 14 and the cartridge 12a to prevent the lubricant oil 11 adhering to the water removing device 12 from leaking to the outside. Providing the gasket 15 makes it possible to prevent the lubricant oil 11 in the gear unit 100 from leaking to the outside through the flange 14.

In order for the gasket 15 to function effectively, the fastening members 13 are required to be fastened to the flange 14 with a predetermined fastening torque. However, there is a possibility that the fastening members 13 are stripped (spins freely) depending on the fastening torque. In order to prevent such a possibility and to hold the gasket 15 rigidly, the thickness t of the flange 14 in the direction from the outside to the inside of the gear unit 100 is formed larger than the thickness of the gearbox 5.

Next, the operation of the gear unit 100 is explained. Power of the traction motor 20 is transmitted through the flexible shaft coupling 24 to the small-gear shaft 4, and the small gear 3 provided around the small-gear shaft 4 engages with the large gear 1 to rotate the large gear 1. The lubricant oil 11, stored at the bottom of the gearbox 5, is carried up by rotations of the large gear 1 and is supplied to the engaging portion between the large gear 1 and the small gear 3, bearings (not shown) provided on both sides of the large gear 1, the small-gear bearings 6 and 7 provided on both sides of the small gear 3, and other parts.

For example, when the large gear 1 rotates in the direction shown by an arrow C in FIG. 2, a part of the lubricant oil 11, carried up by rotations of the large gear 1, is separated from the large gear 1 by a centrifugal force generated by the rotations of the large gear 1, travels along the inner surface of the lid 5a provided on the top of the gearbox 5, and is supplied to the absorbent 12b through the filter 12c. In the absorbent 12b, water having been mixed into the lubricant oil 11 is then removed. The lubricant oil 11 from which water has been removed is returned to the surface of the large gear 1 or to the bottom of the gearbox 5 through the filter 12d.

When the large gear 1 rotates in the direction shown by an arrow D, the amount of the lubricant oil 11 to be supplied to the absorbent 12b becomes smaller than the case when the large gear 1 rotates in the direction shown by the arrow C. However, because the traveling direction of a railway vehicle is reversed by reversing the rotation direction of the large gear 1, water having been mixed into the lubricant oil 11 is removed when the railway vehicle returns (that is, when the large gear 1 rotates in the direction shown by the arrow C).

Next, an example in which the shape of the gearbox 5 is changed is explained.

FIG. 5 is another cross-sectional view of the gear unit 100 taken along the line A-A shown in FIG. 1.

The gear unit 100 shown in FIG. 2 is configured to be removable from the vehicle drive system 200 after the axle 2 fitted through the gearbox 5 and the large gear 1 is removed (that is, after the axle 2 is removed from the truck frame 30 shown in FIG. 1). However, the gear unit 100 shown in FIG. 5 is configured to be removable from the vehicle drive system 200 without removing the axle 2 from the truck frame 30. In the following description, components which are the same as or similar to those in FIGS. 1 to 4 are denoted by the same or similar reference numerals, and a description thereof will be omitted. Only different components are described here.

The gear unit 100 shown in FIG. 5 includes the small gear 3, the large gear 1, the gearbox 5b that is installed on the upper side of the axle 2, and a gearbox 5c that is installed on the lower side of the axle 2. The gear unit 100 is configured such that the axle 2 is vertically sandwiched between the gearbox 5b and the gearbox 5c. That is, a contact surface 52 between the gearbox 5b and the gearbox 5c is provided near a bearing (not shown) that supports the axle 2.

Empty spaces c1, c2, and d as shown in FIG. 5 are formed at locations where the engagement portion 1a faces the inner peripheral surface of the gearboxes 5b and 5c (on the inner surface of the gearboxes 5b and 5c in the circumferential direction of the large gear 1). The empty space d is a space formed above the extended line of the line connecting the axle 2 and the small-gear shaft 4, for example. The empty spaces c1 and c2 are formed below the extended line of the line connecting the axle 2 and the small-gear shaft 4, for example, and are a part of the space formed for ensuring a storing area of the lubricant oil 11.

The water removing device 12 shown in FIG. 5 is arranged in the empty space c1 as an example. As described above, the water removing device 12 is installed in the empty space c1 within the gearbox 5b, and therefore it becomes unnecessary to provide an additional space for providing the water removing device 12 between the engagement portion 1a and the inner peripheral surface of the gearbox 5b. Accordingly, the space formed between the engagement portion 1a and the inner peripheral surface of the gearbox 5b is minimized as required, and it is possible to remove water included in the lubricant oil 11, while downsizing the gearbox 5. The water removing device 12 may be provided in the empty space c2.

Next, a method of fixing the water removing device 12 is explained.

In the gearboxes 5b and 5c shown in FIG. 5, a flange (not shown) is formed below the extended line of the line connecting the axle 2 and the small-gear shaft 4 and on the surface which faces the side surface of the large gear 1 (the surface of the large gear 1 on which the engagement portion 1a is not formed). The flange includes an opening, through which the cartridge 12a of the water removing device 12 is insertable in the direction from the outside to the inside of the gearbox 5. This flange is the same as the flange 14 shown in FIG. 2.

The flange is formed with the opening and is also formed with holes (not shown) through which the fastening members 13 to be inserted toward the gearbox 5 from the outside of the gearbox 5 are insertable. Therefore, after the cartridge 12a is inserted through the opening formed in the flange, the fastening members 13 are screwed into the flange 14 to fix the cartridge 12a to the gearbox 5b. By providing the flange on the gearbox 5b as described above, it is possible to replace the water removing device 12 easily. This flange may be provided on the side surface of the large gear 1 near the empty space c2. A gasket that is the same as the gasket 15 shown in FIG. 2 is assumed to be provided between the flange and the cartridge 12a.

Next, the operation of the gear unit 100 shown in FIG. 5 is explained. Power of the traction motor 20 is transmitted through the flexible shaft coupling 24 to the small-gear shaft 4, and the small gear 3 provided around the small-gear shaft 4 engages with the large gear 1 to rotate the large gear 1. The lubricant oil 11, stored at the bottom of the gearbox 5c, is carried up by rotations of the large gear 1 and is supplied to the engaging portion between the large gear 1 and the small gear 3, bearings (not shown) provided on both sides of the large gear 1, the small-gear bearings 6 and 7 provided on both sides of the small gear 3, and other parts.

For example, when the large gear 1 rotates in the direction shown by the arrow D in FIG. 5, a part of the lubricant oil 11, carried up by rotations of the large gear 1, is separated from the large gear 1 by a centrifugal force generated by the rotations of the large gear 1, travels along the inner surface of the gearbox 5b, and is supplied to the absorbent 12b through the filter 12c. In the absorbent 12b, water having been mixed into the lubricant oil 11 is then removed. The lubricant oil 11 from which water has been removed is returned to the bottom of the gearbox 5c through the filter 12d.

When the large gear 1 rotates in the direction shown by the arrow C, the lubricant oil 11, pushed out of the engaging portion between the small gear 3 and the large gear 1, is also supplied to the absorbent 12b. Therefore, water having been mixed into the lubricant oil 11 is removed in the same manner as when the large gear 1 rotates in the direction shown by the arrow D.

When the water removing device 12 is installed in the empty space b1 or b2 shown in FIG. 2 or in the empty c1 or c2 shown in FIG. 5, it is desirable to install the flange 14 (the flange not shown in FIG. 5) below the extended line of the line connecting the axle 2 and the small-gear shaft 4 and above an oil level 11a of the lubricant oil 11. The reason for this is to prevent the lubricant oil 11 stored in the gearbox 5 or 5c from leaking at the time of attaching/detaching the water removing device 12. The height of the oil level 11a is controlled by an oil level gauge (not shown) such that a part of the large gear 11 is immersed in the lubricant oil 11.

The arrangement location of the water removing device 12 is not limited to the locations respectively shown in FIGS. 2 and 5. The water removing device 12 may be mounted at an appropriate location according to the structure of the gearbox 5 and the shape of the water removing device 12. For example, in FIG. 2, in a case where a space with a size large enough to install the water removing device 12 is provided between the engagement portion 1a and the gearbox 5 on the extended line of the line connecting the axle 2 and the small-gear shaft 4 (between the right side of the large gear 1 and the gearbox 5 in FIG. 2), the water removing device 12 may be provided in this space. With this configuration, although the size of the gearbox 5 is slightly increased, it is still possible to remove water included in the lubricant oil 11.

Furthermore, the flange 14 is formed on the surface of the gearbox 5 shown in FIG. 2, which faces the engagement portion 1a. However, as shown in FIG. 5, the flange 14 may be formed on the surface which faces the side surface of the large gear 1.

Further, a flange (not shown) is formed on the surface of the gearbox 5b shown in FIG. 5, which faces the side surface of the large gear 1. However, as shown in FIG. 5, the flange may be formed on the surface which faces the engagement portion 1a.

In a case where the performance of the absorbent 12b is reduced due to a long period of use, the water removing device 12 shown in FIGS. 2 and 5 may be removed from the gearbox 5 and then the water removing device 12 in which the absorbent 12b is replaced may be attached to the gearbox 5. Alternatively, a spare water removing device 12 having a new absorbent 12b fitted therein may be prepared and then attached to the gearbox 5 in place of the water removing device 12 that has been removed from the gearbox 5.

As explained above, the gear unit 100 according to the present embodiment is the railway vehicle gear unit 100 that is constituted by accommodating, in the gearbox (5, 5b, or 5c), the small gear 3 that is mounted on the rotary shaft of the traction motor 20 provided on the truck frame 30 of a railway vehicle, and the large gear 1 that is mounted on the axle 2 provided on the truck frame 30 and that engages with the small gear 3 to transmit a torque, wherein the water removing device 12 that removes water included in the lubricant oil 11 within the gearbox (5, 5b, or 5c) is installed on the inner surface of the gearbox (5, 5b, or 5c) in the circumferential direction of the large gear 1. Therefore, a water removing process is automatically performed by running the vehicle without carrying out any additional procedure such as providing, from the outside of the gear unit 100, power dedicated to removing water having been mixed into the lubricant oil 11. Accordingly, water having been mixed into the lubricant oil 11 is removed, and degradation of the lubrication performance of the lubricant oil 11 can be suppressed. As a result, overheating and burning of the engaging portion between the large gear 1 and the small gear 3, the small-gear bearings 6 and 7 provided on both sides of the small gear 3, and other parts are suppressed. This makes it possible to use the small-gear bearings 6 and 7 and other parts for a longer period of time.

Moreover, the water removing device 12 is arranged in the space (the empty space) a1, a2, or d formed above the extended line of the line connecting the axle 2 and the small-gear shaft 4 as shown in FIGS. 2 and 5 or is arranged in the empty space b1, b2, c1, or c2 formed below the extended line of the line connecting the axle 2 and the small-gear shaft 4 as shown in FIGS. 2 and 5. Therefore, the space required for arranging the large gear 1 within the gearbox 5 or the space for storing the lubricant oil 11 can be utilized to install the water removing device 12. Accordingly, it is possible to remove water included in the lubricant oil 11, while minimizing the size of the gearbox 5 as required. As a result, it is possible to achieve both downsizing of the gearbox (5, 5b, or 5c) and prevention of degradation of the lubricant oil 11.

Moreover, the water removing device 12 includes a casing (the cartridge 12a) that encloses the absorbent 12b, that is formed with the introduction portion 12e that introduces the lubricant oil 11 carried up by the large gear 1 to the absorbent 12b and the discharge portion 12f that discharges the lubricant oil 11 from which water has been removed by the absorbent 12b, and that is formed detachably on the gearbox 5, 5b, or 5c, the filter 12c that is provided in the introduction portion 12e and that removes foreign matter included in the lubricant oil 11, and the filter 12d that is provided in the discharge portion 12f and that prevents the absorbent 12b from flowing out of the cartridge 12a. In the gearbox (5, 5b, or 5c), the flange 14 is formed above or below the extended line of the line connecting the axle 2 and the small-gear shaft 4 and on the surface which faces the engagement portion 1a. The flange 14 includes the opening through which the cartridge 12a is insertable in the direction from the outside to the inside of the gearbox (5, 5b, or 5c). The cartridge 12a inserted through this opening is fixed to the flange 14 by the fastening members 13. Therefore, even in a case where a space for attaching/detaching the water removing device 12 cannot be ensured on the surface on the traction-motor side or on the counter traction-motor side of the gearbox (5, 5b, or 5c), for example, it is still possible to easily attach/detach the cartridge 12a from the side of the traveling direction of a train. Therefore, the absorbent 12b is replaceable without any additional work such as removing the lid 5a or separating the gearbox 5b from the gearbox 5c for replacing the absorbent 12b. As a result, it is possible to minimize the amount of work associated with the replacement of the absorbent 12b as required.

Moreover, the water removing device 12 includes the casing (the cartridge 12a) that encloses the absorbent 12b, that is formed with the introduction portion 12e that introduces the lubricant oil 11 carried up by the large gear 1 to the absorbent 12b and the discharge portion 12f that discharges the lubricant oil 11 from which water has been removed by the absorbent 12b, and that is formed detachably on the gearbox 5, 5b, or 5c, the filter 12c that is provided in the introduction portion 12e and that removes foreign matter included in the lubricant oil 11, and the filter 12d that is provided in the discharge portion 12f and that prevents the absorbent 12b from flowing out of the cartridge 12a. In the gearbox (5, 5b, or 5c), the flange 14 is formed above or below the extended line of the line connecting the axle 2 and the small-gear shaft 4 and on the surface which faces the side surface of the large gear 1. The flange 14 includes the opening through which the cartridge 12a is insertable in the direction from the outside to the inside of the gearbox (5, 5b, or 5c). The cartridge 12a inserted through this opening is fixed to the flange 14 by the fastening members 13. Therefore, even in a case where a space for attaching/detaching the cartridge 12a cannot be ensured on the side of the traveling direction of a train, for example, it is still possible to easily attach/detach the cartridge 12a from the surface on the traction-motor side or the counter traction-motor side of the gearbox (5, 5b, or 5c). Therefore, the absorbent 12b is replaceable without any additional work such as removing the lid 5a or separating the gearbox 5b from the gearbox 5c for replacing the absorbent 12b. As a result, it is possible to minimize the amount of work associated with the replacement of the absorbent 12b as required.

Furthermore, the gasket 15 that is a sealing member is provided between the flange 14 and the cartridge 12a. Therefore, even when the water removing device 12 is provided on the gearbox (5, 5b, or 5c), it is still possible to prevent the lubricant oil 11 in the gear unit 100 from leaking to the outside.

### Industrial Applicability

As described above, the present invention is mainly applicable to vehicle drive systems, and is particularly useful as an invention that can suppress degradation of the lubrication performance of lubricant oil.

### Reference Signs List

1 large gear
2 axle
3 small gear
4 small-gear shaft
5, 5b, 5c gearbox
5a lid
6, 7 small-gear bearing
8, 9 small-gear bearing cover
8a inner peripheral portion
10 oil slinger
11 lubricant oil
11a oil level
12 water removing device
12a cartridge (casing)
12b absorbent
12c, 12d filter
12e introduction portion
12f discharge portion
13 fastening member
14 flange
15 gasket
20 traction motor
21 wheel
24 shaft coupling
30 truck frame
51, 52 contact surface
100 gear unit
200 vehicle drive system
a1, a2, b1, b2, c1, c2, d empty space (space)

## Claims

1. A railway vehicle gear unit that is constituted by accommodating, in a gearbox, a small gear that is mounted on a rotary shaft of a traction motor provided on a truck frame of a railway vehicle, and a large gear that is mounted on an axle provided on the truck frame and that engages with the small gear to transmit a torque, wherein
on an inner surface of the gearbox in a circumferential direction of the large gear, a water removing device that removes water included in lubricant oil carried up within the gearbox is installed.

2. The railway vehicle gear unit according to claim 1, wherein the water removing device is arranged in a space formed above an extended line of a line connecting the axle and the small-gear shaft or is arranged in a space formed below the extended line.

3. The railway vehicle gear unit according to claim 2, wherein
the water removing device includes
a casing that encloses an absorbent, that is formed with an introduction portion that introduces the lubricant oil carried up by the large gear to the absorbent and a discharge portion that discharges lubricant oil from which water has been removed by the absorbent, and that is formed detachably on the gearbox,
a filter that is provided in the introduction portion and that removes foreign matter included in the lubricant oil, and
a filter that is provided in the discharge portion and that prevents the absorbent from flowing out of the casing,
in the gearbox, a flange is formed above or below the extended line and on a surface which faces the engagement portion, where the flange includes an opening through which the casing is insertable in a direction from outside to inside of the gearbox, and
the casing inserted through the opening is fixed to the flange by a fastening member.

4. The railway vehicle gear unit according to claim 3, wherein a sealing member is provided between the flange and the casing.

5. The railway vehicle gear unit according to claim 2, wherein
the water removing device includes
a casing that encloses an absorbent, that is formed with an introduction portion that introduces the lubricant oil carried up by the large gear to the absorbent and a discharge portion that discharges lubricant oil from which water has been removed by the absorbent, and that is formed detachably on the gearbox,
a filter that is provided in the introduction portion and that removes foreign matter included in the lubricant oil, and
a filter that is provided in the discharge portion and that prevents the absorbent from flowing out of the casing,
in the gearbox, a flange is formed above or below the extended line and on a surface which faces a side surface of the large gear, where the flange includes an opening through which the casing is insertable in a direction from outside to inside of the gearbox, and
the casing inserted through the opening is fixed to the flange by a fastening member.

6. The railway vehicle gear unit according to claim 5, wherein a sealing member is provided between the flange and the casing.
